# EUROPEAN PATENT APPLICATION

(11) **EP 4 661 046 A1**
(43) Date of publication of application: **10.12.2025**
(21) Application number: 24179916.2
(22) Date of filing: 04.06.2024
(51) Int. Cl.: H01H 33/12, H01H 33/22, H01H 33/56

(54) **SF6 FREE GAS INSULATED DISCONNECTOR WITH FULLY CLOSED ARCING CHAMBER ACTUATED BY ROD MECHANISM**

(71) Applicant: GE Vernova Technology GmbH, 5400 Baden (CH)
(72) Inventor: BERNARD, Félix, 73100 Aix-les-Bains (FR); GUYON, Olivier, 73100 Aix-les Bains (FR); MONTBEL, Matthias, 73100 Aix-les-Bains (FR); RECH, Christophe, 73100 Aix-les Bains (FR); SOUCHAL, Samuel, 73100 Aix-les Bains (FR); BERTELOOT, Thomas, 69100 Villeurbanne (FR)
(74) Representative: Rüger Abel Patentanwälte PartGmbB

(57) **Abstract**

The invention concerns a disconnector (100) for a GIS comprising , in a gas chamber and along an axis (AA'):
- a pair of permanent contacts (24, 41), both being fixed;
- an electrically conducting tube (30) movable along said axis (AA') the tube (30) moving from a position in which both permanent contacts are in electrical contact to a position in which both main contacts are electrically separated;
- a pair of arcing contacts (22, 42), one (22) fixed and the other one (42) movable together with said electrically conducting tube (30);
- a pair of rear contacts (52₁, 52₂), one of them (52₂) being in electrical contact with said movable arcing contact (42);
- means (6) for moving said electrically conducting tube (30) and said movable arcing contact (22, 42) along said axis (AA'), thereby opening said disconnector (100) and for separating said rear contacts (52₁, 52₂) from each other before the arcing contacts (22, 42) separate.

## Description

### TECHNICAL FIELD AND PRIOR ART

The invention relates to the gas-insulated substations, commonly referred to as Gas-Insulated Substations (GIS). Substations of this type comprise disconnectors, circuit-breakers, or grounding switches. Switchgear components are generally metal tanks filled with SF₆ (sulfur hexafluoride) under pressure.

Sulfur hexafluoride (SF₆) contributing to the greenhouse effect, it was recently replaced by another gas, the so-called "g3" gas, comprising heptafluoroisobutyronitrile mixed with a dilution gas comprising carbon dioxide and oxygen is used in replacement of SF₆, opening the path to a new generation of high voltage (HV) electrical transmission equipment. This g3 gas has a drastically reduced environmental impact (more than 98% less gas global warming potential (GWP)) .

But it has been noticed that powder is generated during the opening of disconnectors of GIS implementing said gas. This powder, which results from the decomposition of the g3 gas used in replacement of the SF₆ is harmful for dielectric strength. Actually, g3 decomposition is combined with molted metal leading to metal oxyde particules which are spread on the corona shield surface, leading to peak effect.

There is therefore the problem of limiting the generation of this powder and/or of confining it, partially or fully.

### SUMMARY OF THE INVENTION

In order to solve the above problem, the inventors have found a solution to confine the arc generated during disconnector switching.

The invention first concerns a disconnector for a GIS comprising:
- a pair of permanent contacts, one fixed and the other one movabe or both fixed with respect to each other; said permanent contacts are for example spring contacts;
- a pair of arcing contacts, one being fixed and the other one movable;
- a pair of rear contacts, one of them being in electrical contact with said movable arcing contact;
- means for separating said rear contacts from each other before the arcing contacts separate.

Preferably, an electrically conducting tube is movable along said axis (AA') the tube being movable from a position in which both permanent contacts are in electrical contact with each other to a position in which both main contacts are electrically separated from each other. The movable arcing contact can be fixed with respect to said electrically conducting tube.

In an embodiment, said means for separating said rear contacts from each other comprise a lever, for example a two-armed lever, one of said rear contact being fixed to an end of said lever, said lever can be rotating around an axis, which is for example fixed with respect to said movable permanent contact.

Each contact of pair of rear contacts can for example comprise at least one blade, said rear contacts sliding against each other when they are separated. In a more particular embodiment, each contact of said pair of rear contacts comprises two blades which are parallel with each other.

Preferably, the at least one rear contact, which is in electrical contact with said movable arcing contact, is also in electrical contact with said movable main contact.

In a particular embodiment, at least one contact of said pair of rear contacts is movable in a plane which can comprise an axis along which the movable main and arcing contacts can move, for example along an axis which is preferably perpendicular to said axis along which the movable main and arcing contacts can move.

The invention also concerns a GIS comprising:
- a metal tank filled with a gas;
- a disconnector according to the invention, as disclosed above or in this application.

The invention also concerns a method for opening a disconnector of a GIS according to the invention, comprising:
- moving the movable arcing contact and the movable main contact with respect to the fixed arcing contact and the fixed main contact, thereby closing the pair of arcing contacts and separating the pair of permanent contacts from each other;
- then separating said pair of rear contacts from each other before the arcing contacts separate, thereby triggering an arc between said rear contacts;
- then separating said mobile arcing contact with respect to the fixed arcing contact.

The invention also concerns a method for closing a disconnector of a GIS according to the invention, comprising:
- closing said pair of rear contacts before the arcing contacts close;
- moving the movable arcing contact and the tube with respect to the fixed arcing contact and the main contacts, thereby closing the pair of arcing contacts;
- closing the main contacts;
- opening the arcing contacts.

### BRIEF DESCRIPTION OF THE DRAWINGS

- figure 1 shows an example of a Gas-Insulated Substations;
- figures 2A - 2D show an example of a disconnector according to the invention;
- figure 3 shows an enlarged view of back or rear arcing contacts according to the invention;
- figure 4 shows an embodiment of a back or rear arcing contact according to the invention;
- figures 5A - 5B show an embodiment of a disconnector according to the invention and its actuating mechanism, in a side view (figure 4A) and a top view (figure 4B).

### DETAILLED DESCRIPTION OF SPECIFIC EMBODIMENTS

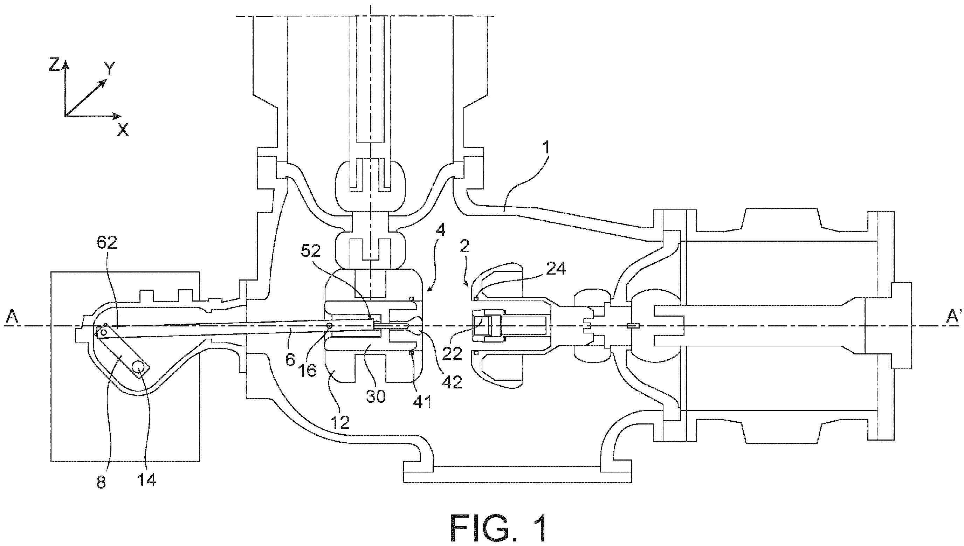

An example of a metal tank 1, or interrupting chamber, comprising a disconnector, is illustrated on figure 1. The metal tank 1 is filled with a gas, for example the "g3" gas comprising heptafluoroisobutyronitrile mixed with a dilution gas comprising carbon dioxide and oxygen.

For example, said gas may comprise:
- heptafluoroisobutyronitrile and/or heptafluoroisopropyl trifluoromethyl ketone (also named 2- butanone, 1,1,1,3,4,4,4-heptafluoro-3-(trifluoromethyl)- (CAS No 756-12-7)), possibly mixed with a gas or a dilution gas comprising at least CO2 and/or O2 and/or N2 and/or an oxygenated compound;
- or at least CO2 and/O2 and/or N2 and/or an oxygenated compound and/or water vapor.

Said metal tank can be surrounded, or can be intended to be surrounded by an atmosphere containing some water and/or water vapor.

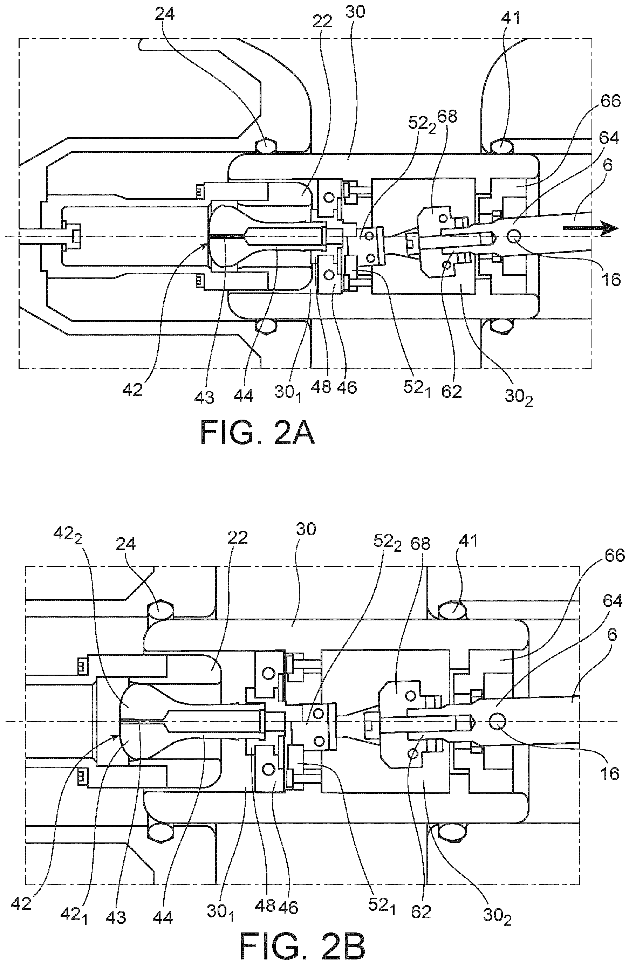

The disconnector extends along an axis AA' (parallel to the axis X) and comprises a pair of electrodes (corona shield) 2, 4 mounted to be in contact relative to each other along said axis AA' with help of an actuation system 6, 8 which is for moving an electrically conducting tube 30 (see Figures 1 and 2A). This tube 30 can be moved along said axis AA' from a closed position in which the electric current can flow through the contacts to an open position in which the electric current is interrupted and vice-versa.

By convention, the term "main contact" is used to designate an electrical contact via which the rated current passes; the main contact is associated with an "arcing contact" which performs the function of breaking and establishing the contact properly. The term "movable contact" is used to designate the movable arcing contact and the tube that are both connected to the actuation system 6, 8.

The disconnector comprises:
- a first movable contact 4 made up of an arcing contact 42, e.g. in the form of a plurality of fingers, and of a main contact 30, 41 (the arcing contact 42 being movable with respect to the contact 41, the tube 30 moving from a position in which both main contacts are in contact to a position in which both main contacts are separated);
- and a second contact 2 that is stationary in this example, made up of an arcing contact 22 and of a main contact 24.

The main contacts 24, 41 can be fixed with respect to each other, the tube 30 moving from a closed position in which the main contacts 24, 41 are in electrical contact with each other to a position in which they are not in electrical contact.

These two elements co-operate between an open position in which the two electrodes 2, 4 are separated from each other and a closed position (not shown on figure 1) in which they allow electrical current to pass between them (thanks to the translation of tube 30).

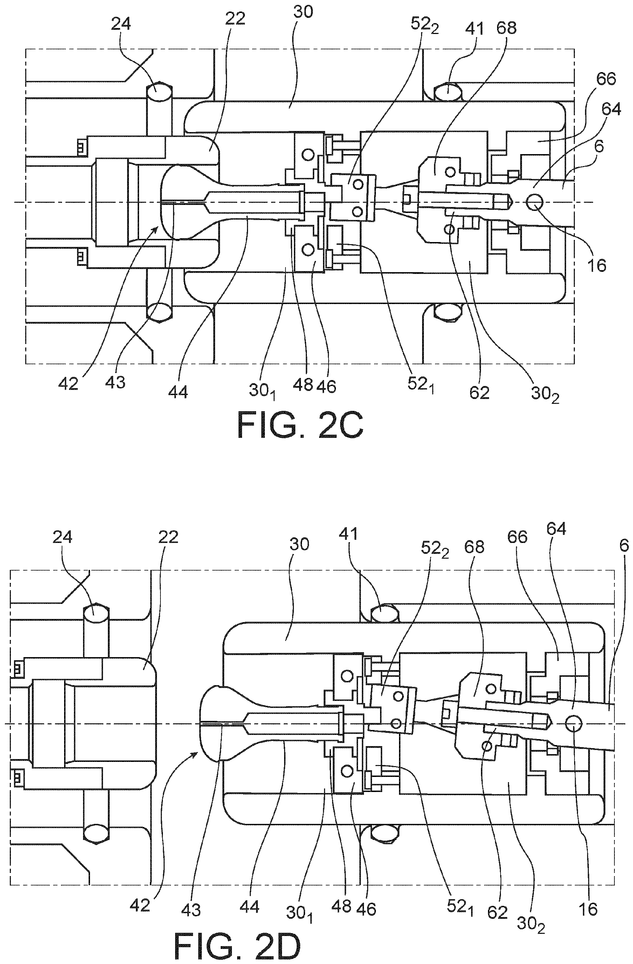

During the breaking procedure, the two main contacts 30, 24 separate, and then the arcing contacts 42, 22 take over (Fig 2B and 2C).

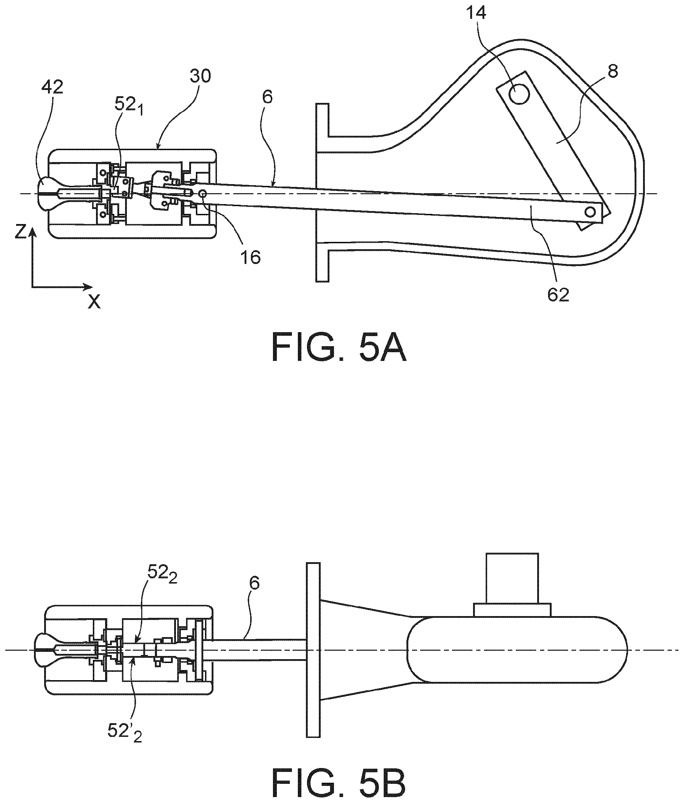

The actuation system 6, 8 (forming means for opening the disconnector) comprises for example a rod 6 actuated at one of its ends 62 by a lever 8 (see figures 1, 5A, 5B) mounted to pivot about an axis 14 (perpendicular to the axis AA' of the disconnector). The rod 6 is also mounted in rotation (in the XZ plane, see figures 1, 5A, 5B) about an axis 16 to move the cylinder 30 along the axis AA'. In other words, the actuation system converts the rotation of the axis 14 (driven by a mechanism not explained in detail) into a translation of the cylinder along axis AA'. As explained below, the rod 6 is extended by a sliding contact inside the fully closed arcing chamber. In an embodiment, the rod 6 forms a two-armed lever, one arm extending between the end 62 and the axis 16 and the other arm extending between said axis 16 and the other end 52 of the rod, which bears at least one electrical contact. In a variant, the means 6 for separating the rear contacts (52₁, 52₂) from each other can comprise a one-armed lever instead of a two-armed lever.

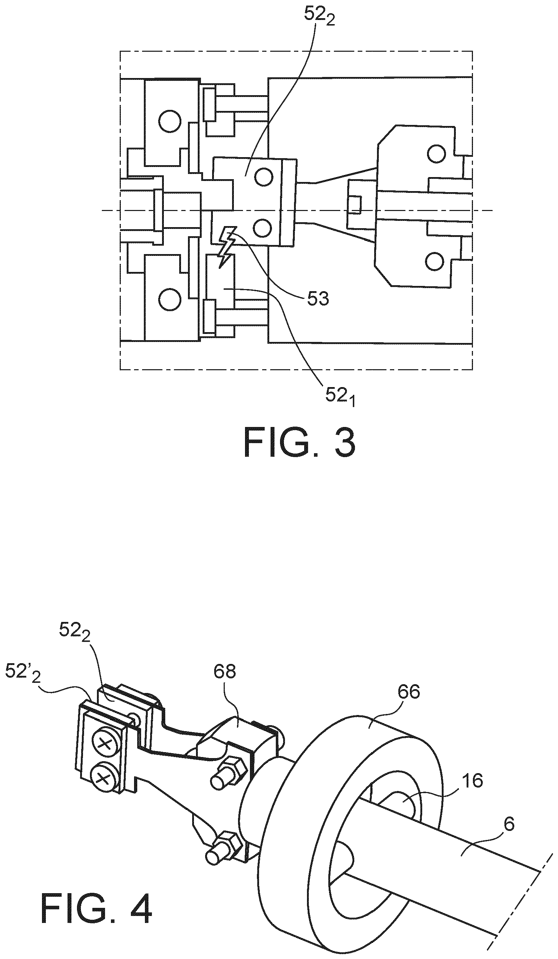

An example of a disconnector according to the invention is more precisely illustrated on Figures 2A-2D and 3. It extends along the longitudinal axis AA'.

The movable electrode 4 comprises the main contact 41 (for example a spring contact which is not movable), a moveable tube 30 and the arcing contact 42.

The movable tube 30 can be moved along axis AA' between a closed position (figure 2A) and an open position (figure 2D), with help of the actuation system 6, 8.

The movable arcing contact 42 is formed at the end of a rod or a tube 44 made of a conducting material, preferably the same as the contact 42.

The arcing contact 42 has for example the form of a bulb having an external diameter which is larger than the external diameter of the rod or tube 44 and which is slightly larger than the internal diameter of the fixed arcing contact 22. The end 42 comprises for example at least two fingers 42₁, 42₂ which have some elasticity so that they can be pressed against the fixed arcing contact 22; they are separated by a central duct 43 which gives the fingers some freedom to be pressed in the direction of the axis AA', in particular when the arcing contact 42 enters the fixed arcing contact 22.

A wall 46 separates gas chamber in 2 parts: a rear gas chamber 30₂ the global gas volume 30₁ (which comprises the whole disconnector gas chamber). This wall 46 bears the movable arcing contact 42 and is also electrically insulated in order to be able to electrically isolate the arcing contact 42 from the electrically conducting tube 30.

On the side of the rear chamber 30₂, a metallic contact 52₁, is electrically linked to the tube 30 and fixed with respect to it.

The actuating rod 6 extends beyond the pivot axis 16 by a metallic contact 52₂, designed to come into contact with the back contact 52₁ (electrically linked and fixed to tube 30) in a range of positions of the actuating rod. This metallic contact 52₂ is always in electrical contact with the movable arcing contact 42 by sliding on it (it can be noted that parts 48, 44 and 42 can be combined in a single machined part). A further contact can be included, to avoid a floating potential on the arcing contact.

The rear contacts 52₂ (which remains in electrical contact with movable arcing contact 42) and 52₁ open slightly after the main contact 24 and tube 30 separate from each other, but during the period when the arcing contacts 42 and 22 are still in contact. As a consequence, an arc 53 is established between the rear contacts 52₁ and 52₂ instead of between arcing contacts 42 and 22 (as shown on figure 3). Starting from a position in which both rear contacts are in contact with each other, the rear contact(s) 52₂ can slide against the rear contact(s) 52₁ when the second rear contact(s) 52₂ is/are driven by the end of the rod 6 in the plane XZ (see figure 5A) in which rod 6 rotates, thus separating the rear contacts.

A disconnector according to the invention can thus comprise means 6 for opening said disconnector and for opening said back or rear contacts 52₁, 52₂ before the arcing contacts 22, 42 are separated.

In an exemplary embodiment, each of said rear contact comprises at least one blade or one spring blade, and said blades can slide against each other in the XZ plane, preferably essentially along an axis perpendicular to the AA' axis; in the embodiment illustrated on figures 4 and 5A, each rear contact comprises two parallel blades (see for example blades 52₂, 52'₂ on figure 4 and on figure 5B).

Figures 2A-2D show different steps of the opening phase of a disconnector according to the invention. It is controlled by the mechanism which drives the insulating rod 6 in translation and in rotation around the rotation axis 16.

A first position is illustrated on figure 2A, in which both electrodes 2 and 4 are in contact through the main contacts 24, 41 (which in this example are both spring contacts) and the tube 30, as well as the rear contacts 52₁ and 52₂.

After initiation of the opening phase, the tube slides against the main contact 24 until they separate (figure 2B), the arcing contact 22 sliding against arcing contact 42. The current flows through the arcing contacts 42, 22, the tube 44, the rear contacts 52₁ and 52₂ (which are still connected together) and the cylinder 30.

After a certain time, the rear contacts 52₁ and 52₂ separate (figure 2C); this triggers an arc 53 between these 2 contacts 52₁ and 52₂ (as illustrated on figure 3), in rear chamber 30zwhere the decomposition of the gas is harmless.

Since an arc 53 is generated between the rear arcing contacts 52₁ and 52₂, decomposition of the gas occurs in the rear chamber 30₂, avoiding decomposition in the front chamber 30₁. Since the arc is generated inside the rear chamber 30₂, the gas decomposition will only occur inside this rear chamber, and will not pollute the front chamber 30₁ (which comprises the whole disconnector gas chamber, where dielectric strength is critical).

The arcing contact 22, 42 then separate (figure 2D). No arc is generated when they separate because the current is already broken by the rear contacts 52₁ and 52₂.

The opening of the disconnector thus comprises the following steps:
- a step of closing the arcing contacts 22, 42;
- a step of opening the main contacts 24, 41;
- a step of opening the rear contacts, which triggers an arc 53 between said back contacts, away from said arcing contacts 22, 42;
- a step of opening the arcing contacts 22, 42;.
- a step of closing the rear contacts in order not to have a floating potential after the opening sequence (Fig 2D).

The rear contacts 52₁, 52₂ thus separate before the arcing contacts 22, 42 separate.

The length from contact 52₂ to lever 6 and the size of the rear contacts 52₁, 52₂ can be dimensioned according to the needs, in particular the expected timing of the arcing.

The closing of the disconnector can comprise the following steps:
- a step of closing the rear contacts 52₁, 52₂;
- a step of closing the arcing contacts 22, 42;
- a step of closing the main contacts 24, 41;
- a step of opening the arcing contacts 22, 42.

The invention finds application in GIS which operate under a rather low voltage between rear contacts (for example 27V, more generally between 10 V and 500V) and at a rather low current (for example 3000A, more generally between 1000A and 6300A)

## Claims

1. A disconnector (100) for a GIS comprising, in a gas chamber and along an axis (AA'):
- a pair of permanent contacts (24, 41), both being fixed;
- an electrically conducting tube (30) movable along said axis (AA') the tube (30) moving from a position in which both permanent contacts are in electrical contact to a position in which both main contacts are electrically separated;
- a pair of arcing contacts (22, 42), one (22) fixed and the other one (42) movable together with said electrically conducting tube (30);
- a pair of rear contacts (52₁, 52₂), one of them (52₂) being in electrical contact with said movable arcing contact (42);
- means (6) for moving said electrically conducting tube (30) and said movable arcing contact (22, 42) along said axis (AA'), thereby opening said disconnector (100) and for separating said rear contacts (52₁, 52₂) from each other before the arcing contacts (22, 42) separate.

2. A disconnector according to claim 1, said means (6) for separating said rear contacts (52₁, 52₂) from each other comprising a one-armed lever or a two-armed lever, one of said rear contact being fixed to an end (52) of said lever, said lever rotating around an axis (16) which is fixed with respect to said movable permanent contact (41).

3. A disconnector according to any of claims 1 or 2, a wall (46) separating said gas chamber in a rear gas chamber (30₂), which contains said rear contacts (52₁, 52₂) and a front chamber (30₁) which contains said arcing contacts when they are closed.

4. A disconnector according to any of claims 1 to 3, one of said rear contacts (52₁, 52₂) being electrically linked and fixed with respect to the movable electrically conducting tube (30).

5. A disconnector according to any of claims 1 to 4, each contact of said pair of rear contacts (52₁, 52₂) comprising at least one blade, said rear contacts sliding against each other when they are separated.

6. A disconnector according to claim 5, each contact of pair of rear contacts (52₁, 52₂) comprising two blades (52₂, 52'₂) which are parallel with each other.

7. A disconnector according to any of claims 1 to 6, at least one of the contacts of said pair of rear contacts (52₁, 52₂) being movable in a plane (XZ) comprising said axis (AA') along which the movable arcing contact can move.

8. A disconnector according to claim 7, at least one of the contacts of said pair of rear contacts (52₁, 52₂) being movable along an axis perpendicular to said (AA') axis.

9. A disconnector according to any of claims 1 to 8, said rear contacts (52₁, 52₂) being located in a portion of the disconnector (100) away from the arcing contacts (22, 42).

10. A GIS comprising:
- a metal tank (1) filled with a gas;
- a disconnector (100) according to any of claims 1 to 9.

11. A GIS according to claim 10 said gas comprising:
- heptafluoroisobutyronitrile and/or heptafluoroisopropyl trifluoromethyl ketone (also named 2- butanone, 1,1,1,3,4,4,4-heptafluoro-3-(trifluoromethyl)- (CAS No 756-12-7)), possibly mixed with a gas or a dilution gas comprising at least CO2 and/or O2 and/or N2 and/or an oxygenated compound;
- or comprising at least CO2 and/O2 and/or N2 and/or an oxygenated compound and/or water vapor.

12. A GIS according to claim 10 or 11, said metal tank being surrounded, or being intended to be surrounded by an atmosphere containing some water and/or water vapor.

13. A method for opening a disconnector of a GIS according to claim 10 to 12, comprising:
- moving the movable arcing contact (42) and the tube (30) with respect to the fixed arcing contact (22) and the main contacts, thereby closing the pair of arcing contacts and separating the pair of permanent contacts (24, 41) ;
- separating said pair of rear contacts (52₁, 52₂) from each other before the arcing contacts (22, 42) separate, thereby triggering an arc (53) between said rear contacts;
- separating said mobile arcing contact (42) with respect to the fixed arcing contact (22).

14. A method for closing a disconnector of a GIS according to claim 10 to 12, comprising:
- closing said pair of rear contacts (52₁, 52₂) before the arcing contacts (22, 42) close;
- moving the movable arcing contact (42) and the tube (30) with respect to the fixed arcing contact (22) and the main contacts (24, 41), thereby closing the pair of arcing contacts;
- closing the main contacts (24, 41);
- opening the arcing contacts (22, 42).
